# EUROPÄISCHE PATENTSCHRIFT

(11) **EP 0 685 997 B1**
(45) Veröffentlichungstag und Bekanntmachung des Hinweises auf die Patenterteilung: **23.02.2000**
(21) Anmeldenummer: 95904517.0
(22) Anmeldetag: 21.12.1994
(51) Int. Cl.: A21C 3/02

(54) **VORRICHTUNG ZUM WALZEN UND/ODER WIRKEN VON TEIG**
DEVICE FOR ROLLING AND/OR WORKING DOUGH
DISPOSITIF POUR ETALER ET/OU TRAVAILLER DE LA PATE

(30) Priorität: 23.12.1993 DE 4344182; 22.03.1994 DE 4409774
(43) Veröffentlichungstag der Anmeldung: 13.12.1995
(73) Patentinhaber: A. FRITSCH GMBH & CO. KG, D-97348 Markt Einersheim (DE)
(72) Erfinder: BERNHARDT, Udo, D-97348 Markt Einersheim (DE); MÜNCH, Christian, D-97318 Kitzingen (DE)
(74) Vertreter: Götz, Georg, Dipl.-Ing.
(86) Internationale Anmeldenummer: EP9404257
(87) Internationale Veröffentlichungsnummer: WO9517097

(56) Entgegenhaltungen:
- DE-B- 1 284 373

## Beschreibung

Die Erfindung betrifft eine Vorrichtung zum Walzen und/oder Wirken von Teig mit einer querschnittlich verstellbaren Teigdurchgangsöffnung und mit einer manuell betätigbaren Mehlstreuvorrichtung.

Wie in nahezu allen Branchen existieren auch im Bäckereigewerbe Betriebe unterschiedlichster Größe. Die Spannweite reicht hier von handwerklichen Kleinbetrieben bis zu großen Fabriken, welche ganze Regionen beliefern. Während es bei derartigen Großbäckereien aus wirtschaftlichen Gesichtspunkten kaum eine Alternative zur Verwendung vollautomatischer Produktionsmaschinen gibt, ist bei Kleinbetrieben der Einsatz handbetätigter und/oder von einer Bedienperson ständig überwachter Maschinen an der Tagesordnung.

Nichts anderes gilt auch für Teigausrollmaschinen, welche zur Herstellung großflächiger Teigbahnen dienen. Während bei automatischen Teigausrollmaschinen sämtliche Funktionen nach entsprechender Programmierung von einem Microprozessor gesteuert werden, ist bei kleineren Teigausrollmaschinen die ständige Anwesenheit einer Bedienperson nötig.

Um ein Anhaften der zwischen zwei Walzen hindurchgeförderten Teigbahn an diesen Walzen zu verhindern, muß die Teigbahn in regelmäßigen Zeitabständen mit Mehl bestreut werden. Zu diesem Zweck ist bei vollautomatischen Teigausrollmaschinen eine Mehlstreuvorrichtung vorhanden, welche in bestimmten Betriebsphasen betätigt wird. Dagegen war es bisher üblich, daß bei kleineren, handbetätigten Teigausrollmaschinen die Bestreuung des Teigbands mit Mehl durch die Bedienperson von Hand ausgeführt wurde. Dies hat vor allem den Nachteil, daß das Mehlpulver aus einer mehr oder weniger großen Höhe verstreut wird, so daß sich bei den wiederholten Bestreuungen der Teigbahn während deren Ausrollens in der Umgebung der Teigausrollmaschine ein dichter Mehlstaubnebel entwickelt. Dieser Umstand führt dazu, daß herkömmliche, handbetätigte Teigausrollmaschinen nicht von Personen bedient werden können, welche auf Mehlstaub allergisch reagieren.

Aus diesem Grund ist es sinnvoll, auch an kleineren, handbetätigten Teigausrollmaschinen mechanische Mehlstreuvorrichtungen anzubauen, bei deren Betätigung das eingefüllte Mehl knapp oberhalb der Teigbahn austritt und dadurch kaum Mehlstaubwirbel auftreten. Auch kann durch die Verwendung einer Mehlstreuvorrichtung die Streumehlmenge optimal dosiert werden. Allerdings treten bei der Bedienung einer angebauten Mehlstreuvorrichtung insofern Schwierigkeiten auf, als die Bedienperson nun zusätzlich zu der ohnehin erforderlichen, ständigen Querschnittsverstellung des Spalts zwischen den Walzen und der Umschaltung der Transportrichtung der Förderbänder nun auch noch die Mehlstreuvorrichtung ein- und ausschalten muß. Das fortwährende Umgreifen zwischen den verschiedenen Schaltern und Hebeln einer derartigen Teigausrollmaschine ist für die Bedienperson aber höchst umständlich und kann bei nachlassender Konzentration schnell zu einem Bedienungsfehler führen.

Der Erfindung liegt daher das Problem zugrunde, eine handbetätigbare Teigausrollmaschine mit angebauter Mehlstreuvorrichtung derart auszugestalten, daß die manuelle Betätigung und/oder Verstellung der einzelnen Vorrichtungen für die Bedienungsperson so weit als möglich vereinfacht und erleichtert wird.

Zu diesem Zweck sieht die Erfindung bei einer gattungsgemäßen Vorrichtung zum Walzen und/oder Wirken von Teig vor, daß das Einstellelement der Verstellvorrichtung für die Teigdurchgangsöffnung mit dem Betätigungselement der Mehlstreuvorrichtung zu einem gemeinsamen Bedienungselement baulich integriert ist, insbesondere damit eine Verstellung der Teigdurchgangsöffnung und die Mehlstreuvorrichtung unabhängig voneinander ausgelöst werden können. Durch dieses konstruktive Merkmal wird die Gesamtzahl der zu bedienenden Elemente trotz der zusätzlich angebauten Mehlstreuvorrichtung nicht erhöht. Die Bedienperson hat im Grunde genommen auch weiterhin nur zwei Elemente zu betätigen, nämlich das kombinierte Bedienungselement für die Walzspaltverstell- und die Mehlstreuvorrichtung sowie ein Schaltorgan für Transportrichtung und/oder -geschwindigkeit der Teigfördereinrichtungen. Somit ist es einer Bedienperson möglich, je eine Hand ständig an einer der beiden Bedienungselemente zu belassen. Dies ermöglicht ein weitgehend ermüdungsfreies Arbeiten, da die Bedienperson ständig eine lockere Hand- und Armhaltung einnehmen kann und nur ab und zu kurze Schalt- und/oder Verstellbewegungen ausführen muß.

Es liegt im Rahmen der Erfindung, daß der Verstellvorrichtung für die Teigdurchgangsöffnung einerseits und der Mehlstreuvorrichtung andererseits unterschiedliche, relativ zueinander bewegliche Bereiche des gemeinsamen Bedienungselements zugeordnet sind. Diese Ausführungsform sieht demnach durch unterschiedliche Finger einer Hand betätigbare Schalt- oder Verstellelemente vor. Hierbei ist es beispielsweise möglich, dem Daumen die Betätigung der Mehlstreuvorrichtung zu übertragen, während die übrigen Finger die Verstellung des Abstands zwischen den Walzen übernehmen.

Es hat sich als günstig erwiesen, daß das Bedienungselement verschwenk-, verdreh-, verschieb- und/oder anhebbar ausgebildet ist und ein zusätzliches Schaltelement aufweist. Bei dieser Ausführungsform wird durch Bewegung des gesamten Bedienungselements beispielsweise die Verstellung des Walzspalts vorgenommen, während auf dem Bedienungselement ein mit diesem bewegtes Schaltelement angeordnet ist, welches die Mehlstreuvorrichtung steuert.

Eine andere Ausführungsform der Erfindung zeichnet sich dadurch aus, daß der Verstellvorrichtung für die Teigdurchgangsöffnung einerseits und der Mehlstreuvorrichtung andererseits unterschiedliche Freiheitsgrade der Bewegung des gemeinsamen Bedienungselements zugeordnet sind. Hierbei ist das gemeinsame Bedienungselement in sich starr, kann jedoch von der Bedienperson in zwei voneinander unabhängigen Richtungen bewegt werden. Dabei entspricht das Maß der Auslenkung des Bedienungselements in jeweils einer der beiden zulässigen Bewegungsrichtungen einem definierten Zustand der Walzspaltverstell- oder der Mehlstreuvorrichtung, während die betreffende Vorrichtung durch eine Bewegung des Bedienungselements in der jeweils anderen Richtung nicht beeinflußt wird.

Es liegt im Rahmen der Erfindung, daß das Bedienungselement entlang von zwei zueinander lotrechten Verschiebe- und/oder Hubachsen beweglich angeordnet ist. Indem das Bedienungselement nach diesem erfindungsgemäßen Merkmal in zwei voneinander unabhängigen Richtungen linear bewegt werden kann, läßt sich die Betätigung und/oder Verstellung der unterschiedlichen Vorrichtungen vollständig voneinander trennen. Während eine horizontale Verschiebung beispielsweise den Abstand zwischen den beiden Walzen beeinflußt, kann eine Vertikalbewegung des gemeinsamen Bedienungselements dagegen der Mehlstreuvorrichtung zugeordnet sein und dabei unabhängig von der durch die Horizontalposition eingestellten Walzspaltweite die Bestreuung des Teigbandes mit Mehl auflösen. Natürlich ist es auch denkbar, auf diese Art zwei voneinander unabhängige Horizontalbewegungen zu kombinieren.

Bei einer anderen, äußerst praktischen Ausführungsform ist das Bedienungselement um zwei zueinander lotrechte Schwenk- und/oder Drehachsen beweglich angeordnet. Andere Freiheitsgrade der Bewegung, der das gemeinsame Bedienungselement fähig ist, sind Schwenk- und Drehbewegungen. Durch Vorgabe der entsprechenden Schwenk- und/oder Drehachsen werden diese Bewegungen definiert. Bei entsprechender Lage dieser Achsen im Raum kann eine Trennung der beiden Bewegungsarten erreicht werden. Die betreffenden Bewegungen sind gegeneinander völlig unabhängig, sofern die zugeordneten Schwenk- und/oder Drehachsen lotrecht zueinander orientiert sind. In der Praxis läßt sich eine derartige Bewegungsfreiheit schaffen, wenn an einer ersten Achse eine dazu lotrechte Schwenk- und/oder Drehachse gelagert und an dieser zweiten Achse das eigentliche Bedienungselement angeordnet ist. Solchermaßen behält die erste Achse ihre Lage im Raum ständig unverändert bei, während die zweite mitsamt dem Bedienungselement um die erste Achse verschwenkt, dabei jedoch immer lotrecht zu dieser ausgerichtet bleibt. Anders ausgedrückt, in jeder Position des Bedienungselements läßt sich dieses innerhalb von zwei Ebenen drehen oder schwenken, wobei diese Ebenen stets lotrecht zueinander verlaufen.

Eine davon konstruktiv abweichende Ausführungsform läßt sich dadurch schaffen, daß das Bedienungselement entlang einer Verschiebe- oder Hubachse sowie um eine dazu parallele Schwenk- oder Drehachse beweglich angeordnet ist. Dieses Konstruktionsmerkmal eröffnet die Möglichkeit der Überlagerung einer Linearbewegung und einer Kreisbewegung. Beide Bewegungen sind genau dann in jeder Position des Bedienungselements voneinander unabhängig, wenn die zugeordneten Achsen parallel zueinander orientiert sind. Denn in diesem Fall findet die Kreisbewegung innerhalb einer Ebene statt, zu der die Linearbewegung immer lotrecht orientiert ist, so daß eine vollständige Bewegungstrennung möglich ist.

Weitere Vorteile lassen sich dadurch erreichen, daß das Bedienungselement oder das zusätzliche Schaltelement mechanisch mit der Verstellvorrichtung für die Teigdurchgangsöffnung gekoppelt ist. Sowohl die Verstellungsbewegung einer oder beider Walzen als auch die zugeordnete Bewegung des Bedienungselements stellen rein mechanische Vorgänge dar, deren Kopplung auf konstruktiv einfachstem Wege durch eine Mechanik erfolgt.

Eine günstige Weiterbildung der Erfindung besteht darin, daß das Bedienungselement oder das zusätzliche Schaltelement mechanisch oder elektrisch mit der Mehlstreuvorrichtung zu deren Betätigung gekoppelt ist. Mehlstreuvorrichtungen sind im allgemeinen zum Anbau an vollautomatische Teigausrollmaschinen konzipiert und aus diesem Grund mit einem Antriebsmotor oder -magnet versehen, der von einem Microprozessor auf elektrischem Weg angesteuert werden kann. Bei Verwendung derartiger Mehlstreuvorrichtungen bietet sich eine elektrische Kopplung mit dem Bedienungselement an.

In Weiterbildung dieses Erfindungsgedankens sieht die Erfindung ein Schaltelement vor, das als Elektroschalter oder -taster ausgebildet ist, der durch Schließen eines Stromkreises die Mehlstreuvorrichtung in Betrieb setzt. Dieses Schaltelement kann entweder von außen zugänglich an dem gemeinsamen Bedienungselement angeordnet sein, um direkt von der Bedienungsperson betätigt zu werden; daneben ist auch eine Anordnung möglich, bei der das betreffende Schaltelement mechanisch mit dem Bedienungselement gekoppelt ist und durch die von einer Bedienungsperson ausgelöste Bewegung desselben betätigt wird. In letzterem Fall kann dieses Schaltelement innerhalb der Maschine angeordnet sein, wo es vor äußeren Einflüssen geschützt ist.

Es liegt im Rahmen der Erfindung, daß das Bedienungselement als Handhebel ausgebildet ist. Aufgrund der für die mechanische Verstellung einer oder beider Walzen erforderlichen Betätigungskraft ist es sinnvoll, daß Bedienungselement so zu gestalten, daß eine Verstellung mittels der Armmuskulatur möglich ist. Bei einer Dreh- oder Schwenkbewegung ergibt sich der zusätzliche Vorteil eines verlängerten Hebelarms, die eine kraftmäßige Übersetzung der Betätigungskraft zur Folge hat und diese dadurch reduziert. Der damit erzielbare Vorteil ist die leichtgängige Betätigung, welche der Bedienungsperson ein ermüdungsfreies Arbeiten erlaubt.

Die Erfindung läßt sich weiterhin mit einer Ein- /Ausschaltautomatik versehen, welche die Mehlstreuvorrichtung bei jeder kurzzeitigen Auslenkung des zugeordneten Betätigungselements ein- und ausschaltet. Um die Bedienperson von der Last zu befreien, während des gesamten Mehlstreuvorgangs den Handhebel entgegen dessen Rückstellfeder und/oder entgegen der Gewichtskraft auslenken zu müssen, kann der Bedienungsvorgang der Mehlstreuvorrichtung auf deren Ein- und Ausschaltvorgang reduziert werden.

Besondere Vorteile bietet eine Abschaltautomatik, welche die Mehlstreuvorrichtung bei einer Umkehr der Bewegungsrichtung der Teigfördervorrichtung abschaltet. Eine solche Anordnung ist vor allem bei Teigausrollmaschinen günstig, bei denen eine Teigbahn ständig von einer Seite einer Walzvorrichtung durch diese hindurch und wieder zurückbewegt wird, während bei jedem Durchgang der Abstand der Walzen stufenartig verringert wird. Eine Bestreuung mit Mehl findet dabei nicht bei jedem Durchgang der Teigbahn durch den Walzenspalt statt, sondern je nach Bedarf in mehr oder weniger großen Zeitabständen. Andererseits soll die Teigbahn auf ihrer gesamten Länge bestreut werden, da diese insofern normalerweise etwa gleiche Oberflächenbeschaffenheit aufweist. Wenn die Mehlstreuvorrichtung zu Beginn eines Durchgangs der Teigbahn durch den Walzenspalt eingeschalten wird, muß sie demnach abgeschalten werden, sobald die Teigbahn etwa vollständig durch den Walzenspalt hindurchgelaufen ist und nun in entgegengesetzter Richtung gefördert wird. Ein solcher Betrieb läßt sich insofern teilautomatisieren, als das Abschalten der Mehlstreuvorrichtung nach einem vollständigen Durchgang der Teigbahn durch den Walzenspalt selbsttätig vorgenommen wird. Indem die Abschaltung der Mehlstreuvorrichtung der Bedienperson abgenommen wird, ist sie der lästigen Pflicht entbunden, den Handhebel nach Einschalten der Mehlstreuvorrichtung ständig in dem entsprechenden Schaltzustand zu halten.

Schließlich sieht die Erfindung eine Abschaltautomatik vor, welche die Mehlstreuvorrichtung bei Stillstand der Teigfördervorrichtung abschaltet. Hierbei handelt es sich vor allem um eine Notabschaltung, die verhindern soll, daß sich die Mehlstreuvorrichtung bei Stillstand der Teigbahn auf diese entleert. Eine unvorhersehbare, sofortige Abschaltung der Teigfördervorrichtung kann aus den unterschiedlichsten Anlässen erfolgen: Es kann ein technischer Fehler auftreten wie beispielsweise ein Kurzschluß eines Antriebsmotors der Teigausrollmaschine; weiterhin kann ein Bedienungsfehler vorliegen wie z.B. eine zu starke Reduzierung des Abstands zwischen den Walzen. In allen diesen Fällen wird die Teigbahn abrupt stillgesetzt und es muß durch die erfindungsgemäße Abschaltautomatik Sorge dafür getragen werden, daß die Mehlstreuvorrichtung ebenfalls sofort außer Betrieb gesetzt wird.

Weiter Merkmale, Einzelheiten und Vorteile auf der Basis der Erfindung ergeben sich aus der nachfolgenden Beschreibung eines bevorzugten Ausführungsbeispiels der Erfindung sowie anhand der Zeichnung. Hierbei zeigen:
- Fig. 1: eine perspektivische Ansicht einer Teigausrollmaschine mit Mehlstreuvorrichtung und erfindungsgemäßem Bedienungselement,
- Fig. 2: eine schematische Darstellung der internen Mechanik des Bedienungselements zur Veranschaulichung von dessen Bewegungsmöglichkeiten und Funktionsprinzip,
- Fig. 3: einen Längsschnitt durch das erfindungsgemäße Bedienungselement entlang der Linie III - III in Fig. 2 in von äußeren Kräften freiem Zustand sowie
- Fig. 4: eine der Fig. 3 entsprechende Darstellung des Bedienungselements in betätigtem Zustand.

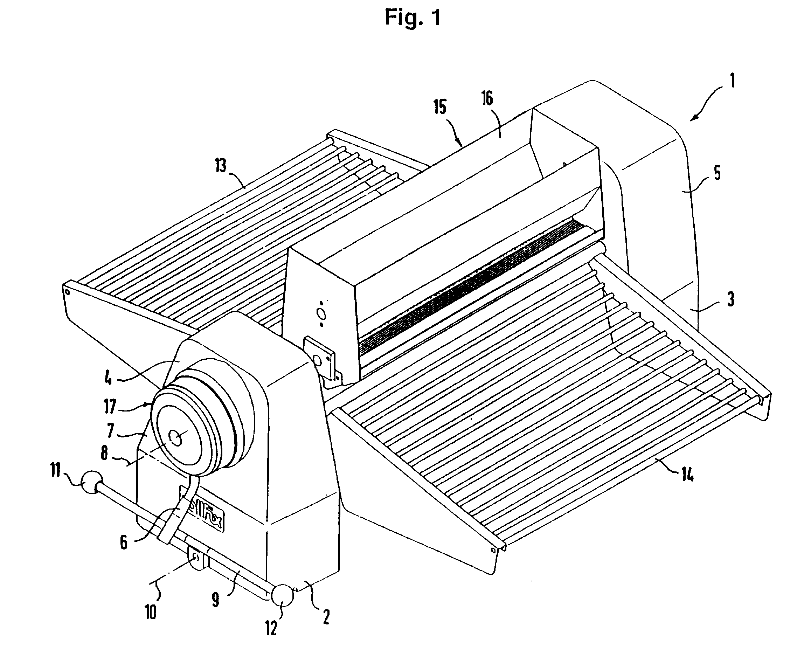

Fig. 1 zeigt eine Teigausrollmaschine 1 zum Aufbau auf einer stabilen Tischplatte od. dgl. Die Teigausrollmaschine 1 weist einen etwa länglichen Rahmen mit zwei endseitigen Standfüßen 2, 3 auf. Die Standfüße 2, 3 sind von im Bereich der Rahmenstirnseiten angeordnete Mechanikelemente umgebenden Hauben 4, 5 abgedeckt. Parallel zu dem die Standfüße 2, 3 miteinander verbindenden Rahmen der Teigausrollmaschine 1 erstrecken sich zwei etwa vertikal übereinander angeordnete, in Fig. 1 verdeckte Walzen, deren stirnseitige Enden im Bereich je eines Standfußes 2, 3 am Maschinenrahmen oder an einem Support gelagert sind.

Zwischen den beiden zueinander parallelen Walzen befindet sich ein Spalt, dessen Dicke durch Anheben oder Absenken einer der beiden Walzen variiert werden kann. Hierzu dient ein Handhebel 6, der an der Außenseite 7 einer der beiden Hauben 4 angeordnet ist. Durch Verschwenken des Handhebels 6 um eine horizontale Drehachse 8 kann die Breite des Spalts zwischen den beiden Walzen definiert eingestellt werden.

Um eine Teigbahn auszurollen, wird diese zwischen den beiden Walzen hindurchbewegt. Dies wird dadurch bewirkt, daß zumindest eine der beiden Walzen motorisch angetrieben ist. Je nach der gewünschten Bewegungsrichtung des Teigbandes durch den Walzspalt kann die Drehrichtung der angetriebenen Walze von einer Bedienungsperson vorgegeben werden. Hierzu dient ein ebenfalls an der Haube 4 unterhalb des Handhebels 6 angelenkter Drehrichtungswahlhebel 9. Der Drehrichtungswahlhebel 9 ist um eine Achse 10 schwenkbar und weist etwa die Form einer Wippe auf. Durch Niederdrücken oder Anheben eines Endes 11, 12 des wippenartigen Hebels 9 wird die mit einem Elektromotor gekoppelte Walze entweder im Uhrzeigersinn oder entgegen dem Uhrzeigersinn angetrieben, so daß ein zwischen den beiden Walzen befindliches Teigband nach rechts oder nach links bewegt wird. Damit die freien Enden des Teigbands nicht auf der Tischplatte aufliegen oder lose herabhängen, schließt sich an die untere Walze zu beiden Seiten des Rahmens der Teigausrollmaschine 1 je ein die Teigbahn unterstützendes Traggestell 13, 14 an.

Etwa im Bereich der oberen Walze befindet sich eine Mehlstreuvorrichtung 15, von der in einen Vorratsbehälter 16 eingefülltes Mehl durch einen bodenseitigen Auslaß auf die Teigbahn aufgegeben werden kann. Die Mehlstreuvorrichtung 15 läßt sich von der Bedienperson steuern, d.h. öffnen und schließen.

Um die Qualität eines Teigbandes während dessen Auswalzvorgangs laufend zu kontrollieren, befindet sich die Bedienperson ständig in Reichweite der Teigausrollmaschine. Da überdies der Durchgang eines Teigbandes nur einen geringen Zeitraum in Anspruch nimmt, muß die Bedienperson in kurzen Zeitabständen den Handhebel 6 zur Verstellung des Walzenspalts sowie den Drehrichtungswahlhebel 9 betätigen. Um trotz einer zügigen Produktion nicht zu ermüden, wird die Bedienperson daher ständig eine Hand am Handhebel 6 haben, um nach Durchgang der Teigbahn durch den Walzenspalt sofort die nächstfolgende, etwas geringere Spaltdicke einzustellen. Ebenso wird die andere Hand der Bedienperson ständig an einem der beiden freien Enden 11, 12 des Drehrichtungswahlhebels 9 liegen, um nach Einstellen der neuen Spaltdicke die Teigbahn unverzüglich in der entgegengesetzten Richtung in Bewegung zu setzen.

Damit die Bedienperson ihre Handhaltung zum Ein- und/oder Ausschalten der Mehlstreuvorrichtung 15 nicht ändern und beispielsweise einen anderen Schalthebel ergreifen muß, wird die Mehlstreuvorrichtung 15 ebenfalls vermittels des Handhebels 6 gesteuert. Zu diesem Zweck ist der Handhebel 6 in der Lage, zusätzlich zu der Drehbewegung um die Schwenkachse 8 eine davon unabhängige Kippbewegung auszuführen. Die Auftrennung und Zuordnung dieser beiden, unterschiedlichen Bewegungen ist einer in dem Bedienungselement 17 integrierten Mechanik übertragen.

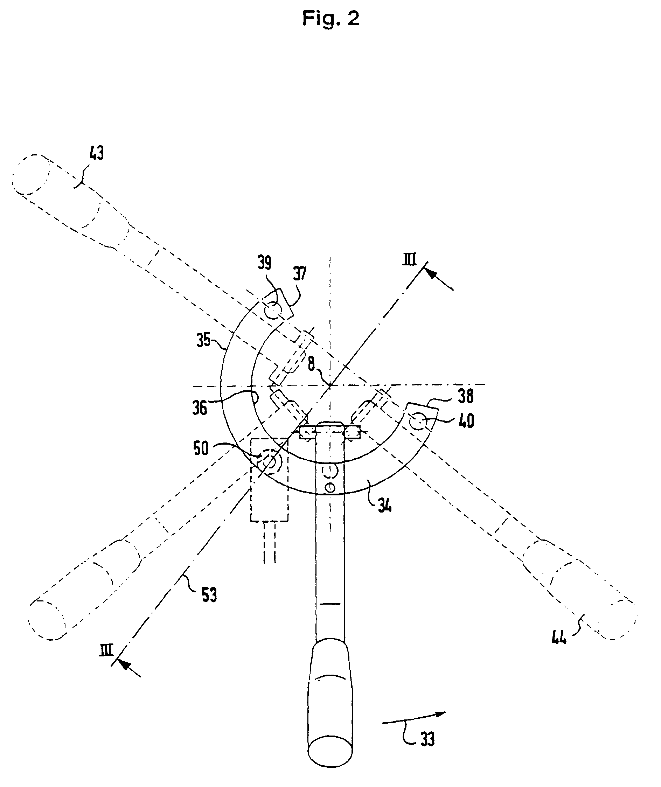

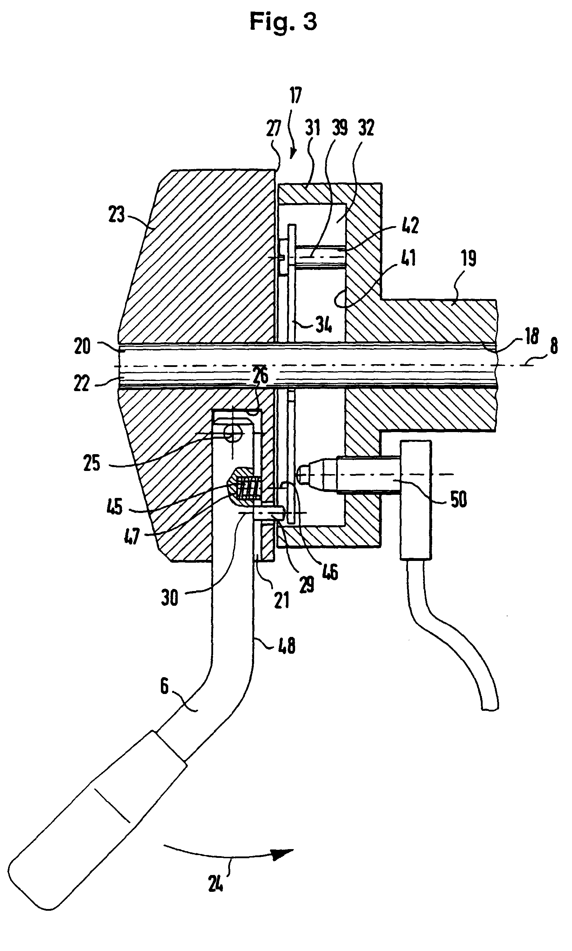

Der innere Aufbau des Bedienungselements 17 ist den Figuren 2 und 3 zu entnehmen. Innerhalb einer zur Drehachse 8 konzentrischen Ausnehmung 18 eines mit dem Rahmen der Teigausrollmaschine 1 starr verbundenen Maschinenteils 19 ist eine Welle 20 drehbar gelagert, deren inneres, in Fig. 3 abgebrochenes Ende beispielsweise ein Zahnrad trägt, welches mit einer vertikalen Zahnstange kämmt, die mit dem die obere Walze tragenden Support starr verbunden ist, so daß eine Drehung der Welle 20 um deren Längsachse 8 eine Höhenverstellung der oberen Walze zur Folge hat. Die Drehung der Welle 20 wird von der Bedienperson vermittels des Handhebels 6 vorgenommen, der zu diesem Zweck innerhalb einer bezüglich der Drehachse 8 etwa radialen Ausnehmung 21 eines auf dem freien Ende 22 der Welle 20 drehfest angeordneten Kopfes 23 eingeschoben ist.

Um dem Handhebel 6 zusätzlich eine Kippbewegung 24 erteilen zu können, ist dieser innerhalb der Ausnehmung 21 um eine zweite Achse 25 verschwenkbar angelenkt. Die zweite Achse 25 befindet sich nahe dem Grund 26 der radialen Ausnehmung 21 und verläuft etwa tangential bezüglich der ersten Drehachse 8. Weiterhin wird eine Kippbewegung 24 des Handhebels 6 dadurch ermöglicht, daß der Durchmesser der Ausnehmung 21 im Kopf 23 des Bedienungselements 17 etwas größer ist als der Durchmesser des Handhebels 6 in diesem Bereich.

Somit ist der Handhebel 6 in der Lage, eine dreidimensionale Bewegung auszuführen, die sich einerseits aus der Schwenkbewegung 33 um die Drehachse 8, andererseits aus der Kippbewegung 24 um die zweite Achse 25 zusammensetzt. Die mit der Höhenverstellung einer Walze gekoppelte Welle 20 erfährt nur die Drehbewegung des Handhebels 6 bezüglich der Schwenkachse 8, nicht dagegen die Kippbewegung 24 desselben. Hier ergibt sich demnach auf natürliche Art eine Unterdrückung der der Mehlstreuvorrichtung zugeordneten Bewegungskomponente des Handhebels 6.

Die Abspaltung der Kippbewegung 24 sowie die Kopplung der betreffenden Bewegungskomponente mit der Mehlstreuvorrichtung 15 erfolgt ebenfalls innerhalb des Bedienungselements 17. Zu diesem Zweck ist in der rückwärtigen, dem Maschinenteil 19 zugewandten, ebenen sowie zur Drehachse 8 lotrechten Begrenzungsfläche 27 eine zur Drehachse 8 parallele Bohrung 28 angeordnet, welche in die Ausnehmung 21 mündet. Diese Bohrung 28 wird von einem Stift 29 durchgriffen, der an dem Handhebel 6 unverrückbar festgelegt, beispielsweise in diesen eingeschraubt ist, wobei die Längsachse 30 des Stifts 29 etwa parallel zur Drehachse 8 verläuft.

Das Maschinenteil 19 weist in seinem äußeren, der rückwärtigen Begrenzungsfläche 27 des auf der Welle 20 angeordneten Kopfs 23 zugewandten Bereich eine etwa kreiszylindrische, zur ersten Drehachse 8 koaxiale Vertiefung 32 auf, deren Halbmesser größer ist als die Exzentrizität des Stifts 29 bezüglich der Drehachse 8, so daß dieser Stift 29 unabhängig von dem Drehwinkel 33 des Handhebels 6 bezüglich der Drehachse 8 in der kreiszylindrischen Vertiefung 32 Platz findet.

Innerhalb der Vertiefung 22 ist eine Platte 34 angeordnet, deren Ebene von der Drehachse 8 lotrecht durchsetzt wird. Wie insbesondere Fig. 2 zu entnehmen ist, hat die Platte 34 etwa die Grundform eines Kreisringsegments mit einem Zentrumswinkel von etwa 240°. Die Platte 34 ist so angeordnet, daß ihre beiden, kreisförmigen Berandungslinien 35, 36 konzentrisch zur Drehachse 8 liegen. Zu diesem Zweck ist die Platte 34 in dem Bereich ihrer beiden Stirnseiten 37, 38 durch je eine zur Drehachse 8 parallele Befestigungsschraube 39, 40 am Grund der kreiszylindrischen Vertiefung 32 befestigt. Dabei ist auf den Schaft der beiden Befestigungsschrauben 39, 40 je ein hülsenförmiges Abstandselement 42 aufgeschoben, welches zwischen der Platte 34 und dem Grund 41 der Vertiefung 32 eingeklemmt ist. Dadurch ist die Platte 34 vom Grund 41 der Vertiefung 32 angehoben und in die Reichweite des Stifts 29 gerückt.

Der Handhebel 6 läßt sich zwischen zwei durch nicht dargestellte Anschlagelemente vorgegebenen Endstellungen 43, 44 verschwenken, wobei der maximale Schwenkwinkel 33 etwa 170° beträgt. Der zulässige Schwenkbereich 33 des Handhebels 6 korrespondiert mit dem Zentrumswinkel der kreisringsegmentförmigen Platte 34 derart, daß der Stift 29 niemals in den Bereich der Befestigungsschrauben 39, 40 gelangt.

Darüber hinaus ist der Halbmesser der äußeren, kreisringförmigen Berandungsfläche 35 der Platte 34 größer, der Halbmesser der inneren, kreisringförmigen Berandungsfläche 36 der Platte 34 dagegen kleiner als die Exzentrizität des Stifts 29 bezüglich der Drehachse 8, so daß dieser bei allen zulässigen Drehwinkeln 33 des Handhebels 6 sich in direkter Nähe des freitragenden Teils der Platte 34 befindet.

Der Stift 29 ist jedoch in von äußeren Kräften freiem Zustand des Handhebels 6 von der Platte 34 abgehoben. Dies wird durch eine innerhalb der Ausnehmung 21 des Kopfs 23 angeordnete Druckfeder 45 bewirkt, deren Längsachse 46 parallel zur Drehachse 8 ist. Um die Schraubenfeder 45 vor einem Herausfallen aus der Ausnehmung 21 zu sichern, ist sie in ein Sackloch 47 eingesetzt, das sich an derselben Seite 48 des Handhebels 6 befindet wie der Stift 29.

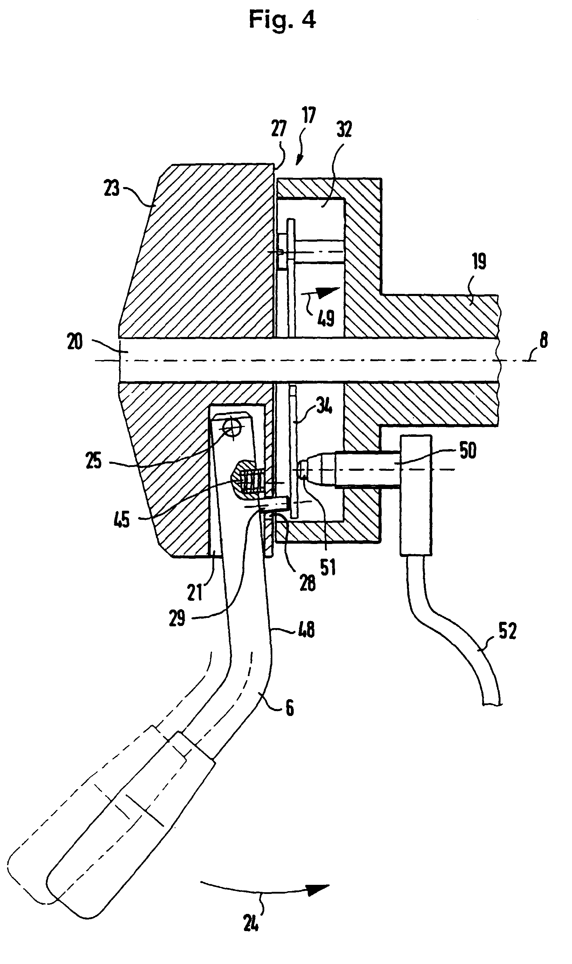

Wie in Fig. 4 dargestellt ist, läßt sich der Handhebel 6 entgegen der Kraft der Druckfeder 45 in Richtung auf das Maschinenteil 19 kippen 24. Hierbei taucht der Stift 29 nahezu vollständig in die dafür vorgesehene Bohrung 28 ein und gelangt dabei an der Platte 34 zur Anlage. Da sich der Stift 29 unabhängig vom Drehwinkel 33 auf jeden Fall in dem freitragenden Bereich der Platte 34 zwischen deren beiden Befestigungspunkten 39, 40 befindet, ist die aus einem relativ dünnen Blech gefertigte Platte 34 in der Lage, sich zu verbiegen und dabei dem Stift 29 elastisch nachzugeben.

Diese etwa lineare, zur Drehachse 8 nahezu parallele Biegebewegung 49 der kreisringsegmentförmigen Platte 34 wird vermittels eines Microschalters 50 in ein elektrisches Signal umgesetzt. Dieser ist in dem Maschinenteil 19 derart eingebaut, daß sein Schaltstift 51 parallel zur Drehachse 8 linear beweglich ist und bei unverbogener Platte 34 einen minimalen Abstand zu dieser Aufweist. Sobald sich die Platte 34 infolge eines Kippens 24 des Handhebels 6 in Richtung 49 verbiegt, berührt sie den Schaltstift 51 und drückt diesen in den Microschalter 50 hinein, wodurch dessen Schaltkontakte geschlossen werden. Der Microschalter 50 ist über ein Anschlußkabel 52 mit der Mehlstreuvorrichtung 15 verbunden und setzt diese in Betrieb.

Damit bereits bei einer kleinen Kippbewegung 24 des Handhebels 6 der Schaltpunkt des Microschalters 50 überschritten wird, ist dieser etwa auf der Symmetrieachse 53 der kreisringsegmentförmigen Platte 34 angeordnet, wo deren Verbiegung 49 am stärksten ist.

## Patentansprüche

1. Vorrichtung (1) zum Walzen und/oder Wirken von Teig mit einer querschnittlich verstellbaren Teigdurchgangsöffnung und mit einer manuell betätigbaren Mehlstreuvorrichtung (15), dadurch gekennzeichnet, daß das Einstellelement der Verstellvorrichtung für die Teigdurchgangsöffnung mit dem Betätigungselement der Mehlstreuvorrichtung (15) zu einem gemeinsamen Bedienungselement (17) baulich integriert ist.

2. Vorrichtung nach Anspruch 1, dadurch gekennzeichnet, daß der Verstellvorrichtung für die Teigdurchgangsöffnung einerseits und der Mehlstreuvorrichtung (15) andererseits unterschiedliche, relativ zueinander bewegliche Bereiche des gemeinsamen Bedienungselements zugeordnet sind.

3. Vorrichtung nach Anspruch 2, dadurch gekennzeichnet, daß das Bedienungselement verschwenk-, verdreh-, verschieb- und/oder anhebbar ausgebildet ist und ein zusätzliches Schaltelement aufweist.

4. Vorrichtung nach Anspruch 1, dadurch gekennzeichnet, daß der Verstellvorrichtung für die Teigdurchgangsöffnung einerseits und der Mehlstreuvorrichtung (15) andererseits unterschiedliche Freiheitsgrade der Bewegung des gemeinsamen Bedienungselements (17) zugeordnet sind.

5. Vorrichtung nach Anspruch 4, dadurch gekennzeichnet, daß das Bedienungselement (17) entlang von zwei zueinander lotrechten verschiebe- und/oder Hubachsen beweglich angeordnet ist.

6. Vorrichtung nach Anspruch 4, dadurch gekennzeichnet, daß das Bedienungselement um zwei zueinander lotrechte Schwenk- und/oder Drehachsen (8, 25) beweglich angeordnet ist.

7. Vorrichtung nach Anspruch 4, dadurch gekennzeichnet, daß das Bedienungselement entlang einer Verschiebe- oder Hubachse sowie um eine dazu parallele Schwenk- oder Drehachse beweglich angeordnet ist.

8. Vorrichtung nach einen der vorhergehenden Ansprüche, dadurch gekennzeichnet, daß das Bedienungselement oder das zusätzliche Schaltelement mechanisch mit der Verstellvorrichtung für die Teigdurchgangsöffnung gekoppelt ist.

9. Vorrichtung nach einem der vorhergehenden Ansprüche, dadurch gekennzeichnet, daß das Bedienungselement oder das zusätzliche Schaltelement mechanisch oder elektrisch mit der Mehlstreuvorrichtung (15) zu deren Betätigung gekoppelt ist.

10. Vorrichtung nach Anspruch 9, gekennzeichnet durch ein Schaltelement, das als Elektroschalter oder -taster ausgebildet ist, der durch Schließen eines Stromkreises die Mehlstreuvorrichtung (15) in Betrieb setzt.

11. Vorrichtung nach einem der vorhergehenden Ansprüche, dadurch gekennzeichnet, daß das Bedienungselement als Handhebel (6) ausgebildet ist.

12. Vorrichtung nach Anspruch 11, dadurch gekennzeichnet, daß der Handhebel (6) etwa radial zu einer ersten, etwa horizontalen Schwenkachse (8, 20) angeordnet ist.

13. Vorrichtung nach Anspruch 12, dadurch gekennzeichnet, daß die erste Schwenkachse (8, 20) mit der Verstellvorrichtung für die Teigdurchgangsöffnung mechanisch gekoppelt ist.

14. Vorrichtung nach Anspruch 13 in verbindung mit Anspruch 6, dadurch gekennzeichnet, daß der Handhebel (6) an einer zweiten Schwenkachse (25) angelenkt ist, die zusammen mit dem Handhebel (6) um die erste Schwenkachse (8) verschwenkt und dabei immer tangential zu dieser ausgerichtet ist.

15. Vorrichtung nach Anspruch 14, gekennzeichnet durch ein etwa parallel zur ersten Schwenkachse bewegliches Element, das mit dem Handhebel (6) derart gekoppelt ist, daß aus dessen Gesamtbewegung (33, 24) ausschließlich eine Bewegungskomponente (24) herausgefiltert wird.

16. Vorrichtung nach Anspruch 15, dadurch gekennzeichnet, daß das Bewegungsfilterelement stabförmig ausgebildet und koacial innerhalb der ersten Schwenkachse (20) angeordnet ist.

17. Vorrichtung nach Anspruch 15, dadurch gekennzeichnet, daß das Bewegungsfilterelement etwa die Form eines Kreisrings oder Kreisringsegments (34) aufweist, welches koaxial zur ersten Drehachse (8) angeordnet ist.

18. Vorrichtung nach Anspruch 16 oder 17, dadurch gekennzeichnet, daß die Ausgangslage des Bewegungsfilterelements durch rückstellende Federwirkung stabilisiert ist.

19. Vorrichtung nach Anspruch 18 in Verbindung mit Anspruch 17, dadurch gekennzeichnet, daß das Bewegungsfilterelement (34) in sich verbiegsam ausgebildet und an einem oder an zwei voneinander beabstandeten Punkten (39, 40) am Rahmen (19) oder am Gehäuse der Vorrichtung (1) unverrückbar festgelegt ist.

20. Vorrichtung nach einem der Ansprüche 15 bis 19, dadurch gekennzeichnet, daß ein zur ersten Schwenkachse (8) etwa paralleler Schaltstift (29) der Mehlstreuvorrichtung oder eines Mikroschalters (50), der durch Schließen eines Stromkreises die Mehlstreuvorrichtung (15) in Betrieb setzt, einstückig mit dem Bewegungsfilterelement (34) ausgebildet oder mit diesem formschlüssig gekoppelt ist.

21. Vorrichtung nach Anspruch 20 in Verbindung mit Anspruch 16, dadurch gekennzeichnet, daß der Schaltstift (29) in beiden Umfangsrichtungen des Kreisrings oder - segments (34) etwa gleiche Zentrumswinkel mit dem nächstgelegenen Befestigungspunkt (39, 40) einschließt.

22. Vorrichtung nach einem der Ansprüche 15 bis 21, gekennzeichnet durch ein etwa zwischen dem Handhebel (6) und der ersten Drehachse (20) angeordnetes Federelement (45), welches den Handhebel (6) in unbetätigtem Zustand von dem Bewegungsfilterelement (34) abhebt.

23. Vorrichtung nach einem der vorhergehenden Ansprüche, gekennzeichnet durch eine Ein-/Ausschaltautomatik, welche die Mehlstreuvorrichtung (15) bei jeder kurzzeitigen Auslenkung (24) des zugeordneten Betätigungselements abwechselnd ein- und ausschaltet.

24. Vorrichtung nach einem der vorhergehenden Ansprüche, gekennzeichnet durch eine Abschaltautomatik, welche die Mehlstreuvorrichtung (15) bei einer Umkehr der Bewegungsrichtung der Teigfördervorrichtung abschaltet.

25. Vorrichtung nach einem der vorhergehenden Ansprüche, gekennzeichnet durch eine Abschaltautomatik, welche die Mehlstreuvorrichtung (15) bei Stillstand der Teigfördervorrichtung abschaltet.

## Claims

1. Apparatus for rolling and/or kneading dough, having a dough passage aperture of adjustable cross-section and a manually actuatable flour-scattering device (15), characterised in that the setting element of the adjusting device for the dough passage aperture is structurally integral with the actuating element for the flour-scatting device (15) to form a common operating element (17).

2. Apparatus according to claim 1, characterised in that the adjusting device for the dough passage aperture on the one side and the flour-scattering device (15) on the other are allocated different regions, which move relative to one another, of the common operating element.

3. Apparatus according to claim 2, characterised in that the operating element is formed pivotably, rotatably, displaceably and/or liftably and has an additional switching element.

4. Apparatus according to claim 1, characterised in that the adjustment device for the dough passage aperture on the one hand and the flour-scattering device (15) on the other are allocated different degrees of freedom of the movement of the common operating element (17).

5. Apparatus according to claim 4, characterised in that the operating element (17) is disposed movably along two displacement and/or lifting axes extending perpendicular to one another.

6. Apparatus according to claim 4, characterised in that the operating element is disposed movably about and/or two axes of pivoting or rotation (8, 25) extending perpendicular to one another.

7. Apparatus according to claim 4, characterised in that the operating element is disposed so as to move along a displacement or lifting axis and about a pivoting or rotating axis parallel thereto.

8. Apparatus according to one of the preceding claims, characterised in that the operating element or the additional switching element is coupled mechanically or electrically to the adjustment device for the dough passage aperture.

9. Apparatus according to one of the preceding claims, characterised in that the operating element or the additional switching element is coupled mechanically or electrically to the flour-scattering device (15) for actuation thereof.

10. Apparatus according to claim 9, characterised by a switching element, which is formed as an electric switch or button, which by closing a circuit sets the flour-scattering device (15) in operation.

11. Apparatus according to one of the preceding claims, characterised in that the operating element is formed as a hand lever (6).

12. Apparatus according to claim 11, characterised in that the hand lever (6) is disposed approximately radial to a first, approximately horizontal pivotal axis (8, 20).

13. Apparatus according to claim 12, characterised in that the first pivotal axis (8, 20) is mechanically coupled to the adjusting device for the dough passage aperture.

14. Apparatus according to claim 13 in combination with claim 6, characterised in that the hand lever (6) is coupled to a second pivotal axis (25), which pivots together with the hand lever (6) about the first pivotal axis (8) and thus is always aligned tangentially thereto.

15. Apparatus according to claim 14, characterised by an element, which moves approximately parallel to the first pivotal axis and which is so coupled to the hand lever (6) that from its total movement (33, 34) only one movement component (24) is filtered out.

16. Apparatus according to claim 15, characterised in that the movement filtering element is rod-shaped and is disposed coaxially inside the first pivotal axis (20).

17. Apparatus according to claim 15, characterised in that the movement filtering element has approximately the shape of a circle or circle segment (34), which is disposed coaxially to the first axis of rotation (8).

18. Apparatus according to claim 16 or 17, characterised in that the starting position of the movement filtering element is stabilised by restoring spring action.

19. Apparatus according to claim 18 in combination with claim 17, characterised in that the movement filtering element (34) is formed to be bendable into itself and is fixed immovably at one or two spaced points (39, 40) on the frame (19) or on the housing of the apparatus (1).

20. Apparatus according to one of claims 15 to 19, characterised in that a trip dog (29), approximately parallel to the first pivotal axis (8), of the flour-scattering device or of a micro-switch (50), which by closing a circuit sets the flour-scattering device (15) in operation, is formed integrally with the movement filtering element (34) or is coupled thereto with positive locking.

21. Apparatus according to claim 20 in combination with claim 16, characterised in that the trip dog (29) includes in both circumferential directions of the circle or segment of a circle (34) approximately the same central angle with the closest fixing point (39, 40).

22. Apparatus according to one of claims 15 to 21, characterised by a spring element (45), which is disposed approximately between the hand lever (6) and the first axis of rotation (20) and which lifts the hand lever (6) in the non-actuated state from the movement filtering element (34).

23. Apparatus according to one of the preceding claims, characterised by an automatic control on-off switch which alternately switches on and off the flour-scattering device (15) when there is any brief excursion (24) of the associated actuating element.

24. Apparatus according to one of the preceding claims, characterised by an automatic switch-off control, which switches off the flour-scattering device (15) when there is a reversal of direction of movement of the dough-conveying device.

25. Apparatus according to one of the preceding claims, characterised by an automatic switch-off control, which switches off the flour-scattering device (15) when the dough conveying device is stationary.

## Revendications

1. Dispositif (1) destiné à rouler et/ou pétrir de la pâte, comportant une ouverture de passage de pâte de section transversale réglable, et un dispositif de saupoudrage de farine (15) à actionnement manuel, caractérisé en ce que l'élément de réglage du dispositif de réglage pour l'ouverture de passage de pâte est intégré, sur le plan de la construction, à l'élément d'actionnement du dispositif de saupoudrage de farine (15) en formant un élément de manoeuvre commun (17).

2. Dispositif selon la revendication 1, caractérisé en ce qu'au dispositif de réglage pour l'ouverture de passage de pâte d'une part, et au dispositif de saupoudrage de farine (15) d'autre part, sont affectées des zones différentes, mobiles relativement l'une par rapport à l'autre, de l'élément de manoeuvre commun.

3. Dispositif selon la revendication 2, caractérisé en ce que l'élément de manoeuvre est d'une configuration permettant son pivotement, sa rotation relative, son coulissement et/ou son soulèvement, et présente un élément de commande supplémentaire.

4. Dispositif selon la revendication 1, caractérisé en ce qu'au dispositif de réglage pour l'ouverture de passage de pâte d'une part, et au dispositif de saupoudrage de farine (15) d'autre part, sont affectés des degrés de liberté différents, du mouvement de l'élément de manoeuvre commun (17).

5. Dispositif selon la revendication 4, caractérisé en ce que l'élément de manoeuvre (17) est disposé de manière mobile le long de deux axes de coulissement et/ou de levée perpendiculaires l'un à l'autre.

6. Dispositif selon la revendication 4, caractérisé en ce que l'élément de manoeuvre est disposé de manière mobile le long de deux axes de pivotement et/ou de rotation (8, 25) perpendiculaires l'un à l'autre.

7. Dispositif selon la revendication 4, caractérisé en ce que l'élément de manoeuvre est disposé de manière mobile le long d'un axe de coulissement ou de levée, ainsi qu'autour d'un axe parallèle de pivotement ou de rotation.

8. Dispositif selon l'une des revendications précédentes, caractérisé en ce que l'élément de manoeuvre ou l'élément de commande supplémentaire est couplé mécaniquement au dispositif de réglage pour l'ouverture de passage de pâte.

9. Dispositif selon l'une des revendications précédentes, caractérisé en ce que l'élément de manoeuvre ou l'élément de commande supplémentaire est couplé mécaniquement ou électriquement au dispositif de saupoudrage de farine (15) en vue de son actionnement.

10. Dispositif selon la revendication 9, caractérisé par un élément de commande réalisé en tant que commutateur ou bouton-pousssoir électrique, qui met en fonctionnement le dispositif de saupoudrage de farine (15), par fermeture d'un circuit électrique.

11. Dispositif selon l'une des revendications précédentes, caractérisé en ce que l'élément de manoeuvre est réalisé en tant que levier à main (6).

12. Dispositif selon la revendication 11, caractérisé en ce que le levier à main (6) est disposé environ radialement par rapport à un premier axe de pivotement (8, 20) sensiblement horizontal.

13. Dispositif selon la revendication 12, caractérisé en ce que le premier axe de pivotement (8, 20) est couplé mécaniquement au dispositif de réglage pour l'ouverture de passage de pâte.

14. Dispositif selon la revendication 13, en combinaison avec la revendication 6, caractérisé en ce que le levier à main (6) est articulé à un second axe de pivotement (25), qui pivote, en commun avec le levier à main (6), autour du premier axe de pivotement (8) en étant, à cette occasion, toujours orienté tangentiellement à celui-ci.

15. Dispositif selon la revendication 14, caractérisé par un élément mobile approximativement parallèlement au premier axe de pivotement, et couplé au levier à main (6) de façon telle, que de son mouvement global (33, 24) est exclusivement filtrée une composante de mouvement (24).

16. Dispositif selon la revendication 15, caractérisé en ce que l'élément de filtrage de mouvement est réalisé en forme de barre et est disposé coaxialement à l'intérieur du premier axe de pivotement (20).

17. Dispositif selon la revendication 15, caractérisé en ce que l'élément de filtrage de mouvement présente sensiblement la forme d'un anneau circulaire ou d'un segment d'anneau circulaire (34), qui est disposé coaxialement au premier axe de rotation (8).

18. Dispositif selon la revendication 16 ou 17, caractérisé en ce que la position initiale de l'élément de filtrage de mouvement est stabilisée par un effet de rappel de ressort.

19. Dispositif selon la revendication 18, en combinaison avec la revendication 17, caractérisé en ce que l'élément de filtrage de mouvement (34) est réalisé de manière à être flexible en soi, et est fixé de manière immobilisée en un ou en deux points (39, 40), espacés l'un de l'autre, du cadre (19) ou du carter du dispositif (1).

20. Dispositif selon l'une des revendications 15 à 19, caractérisé en ce qu'une cheville de commande (29) sensiblement parallèle au premier axe de pivotement (8), du dispositif de saupoudrage de farine ou d'un micro-interrupteur (50), qui met en fonctionnement le dispositif de saupoudrage de farine (15) par fermeture d'un circuit électrique, est réalisée d'un seul tenant avec l'élément de filtrage de mouvement (34) ou est couplée à celui-ci par complémentarité de forme.

21. Dispositif selon la revendication 20, en combinaison avec la revendication 16, caractérisé en ce que la cheville de commande (29) forme, dans les deux directions périphériques de l'anneau circulaire ou du segment d'anneau circulaire (34), des angles au centre sensiblement identiques avec le point de fixation (39, 40) le plus proche.

22. Dispositif selon l'une des revendications 15 à 21, caractérisé par un élément de ressort (45) disposé environ entre le levier à main (6) et le premier axe de rotation (20), et qui soulève le levier à main (6), à l'état non actionné, de l'élément de filtrage du mouvement (34).

23. Dispositif selon l'une des revendications précédentes, caractérisé par un automatisme de mise en marche et de mise à l'arrêt, qui, pour chaque déviation (24) temporaire de l'élément d'actionnement associé, met alternativement en marche et à l'arrêt le dispositif de saupoudrage de farine (15).

24. Dispositif selon l'une des revendications précédentes, caractérisé par un automatisme de mise à l'arrêt, qui met à l'arrêt le dispositif de saupoudrage de farine (15) lors d'une inversion de la direction de mouvement du dispositif de transport de pâte.

25. Dispositif selon l'une des revendications précédentes, caractérisé par un automatisme de mise à l'arrêt, qui met à l'arrêt le dispositif de saupoudrage de farine (15) lors de l'arrêt du dispositif de transport de pâte.
